# DEMANDE DE BREVET EUROPEEN

(11) **EP 1 792 857 A1**
(43) Date de publication de la demande: **06.06.2007**
(21) Numéro de dépôt: 06370037.1
(22) Date de dépôt: 05.12.2006
(51) Int. Cl.: B65G 47/51, B65G 47/31

(54) **Procédé de transfert et de stockage, dans une installation pour l'accumulation et la restitution de produits, et dispositif accumulateur conçu pour la mise en oeuvre du procédé**

(30) Priorité: 05.12.2005 FR 0512315
(71) Demandeur: SIEREM, SARL, 59560 Comines (FR)
(72) Inventeur: Lamarcq, Grégory, 59560 Comines (FR)
(74) Mandataire: Duthoit, Michel Georges André

(57) **Abrégé**

L'invention est relative à un procédé de transfert et de stockage pour l'accumulation et la restitution des produits ? ainsi qu'à un dispositif accumulateur spécialement conçu pour la mise en oeuvre du procédé.

Le dispositif accumulateur assure notamment le transfert de produits entre un poste de travail amont et un poste de travail aval.

En cas d'arrêt momentané du poste de travail aval, le dispositif permet l'accumulation des produits. Lors de la reprise de fonctionnement du poste de travail aval, le dispositif accumulateur permet la restitution des produits alors que le poste de travail amont fonctionne en régime nominal.

L'invention trouvera une application particulière par exemple, comme procédé de transfert et de stockage entre une thermoformeuse de blisters fonctionnant en continu et une encartonneuse fonctionnant par alternance.

## Description

La présente invention concerne un procédé de transfert et de stockage, dans une installation pour l'accumulation et la restitution de produits, ainsi qu'un dispositif accumulateur conçu pour la mise en oeuvre du procédé.

Dans les industries modernes, les lignes de production sont aujourd'hui conçues comme une série de postes de travail automatisés. Chacun des postes de travail est prévu pour assurer une tâche particulière de traitement dans la séquence de production.

Des chaînes de transfert ou autres convoyeurs assurent l'alimentation et l'évacuation en produits entre les différents postes.

Néanmoins, en cas de réglage de maintenance ou de disfonctionnement d'un poste de travail, ce dernier doit être arrêté, ce qui entraînerait normalement l'arrêt total de la ligne de production.

On prévoit alors des dispositifs permettant d'accumuler et de restituer les produits, et destinés à servir de tampon en cas de différences de cadences de production entre deux postes de travail amont et aval successifs.

Ces dispositifs permettent à l'industriel de ne pas arrêter la ligne de production dans sa totalité et, de lisser les anomalies dans le cas d'un arrêt momentané d'un poste.

Plus précisément, lorsqu'un poste de travail est arrêté momentanément, les produits provenant du poste de travail précédent sont accumulés et stockés pour être ensuite restitués.

Toutefois, dans les dispositifs de l'art antérieur, les produits accumulés sont restitués uniquement lorsque le flux de produits en amont, notamment généré par le poste de travail, dit précédent, ou amont, est nul ou inférieur à un flux correspondant au régime nominal de production dudit poste précédent.

Or, dans certains cas, cette situation ne peut jamais arriver, certains postes de travail ne pouvant fonctionner qu'en continu et à un régime nominal établi bien particulier.

Ce problème pourra notamment être rencontré dans le procédé de fabrication de produits en matière plastique, notamment avec les thermoformeuses. Dans ce cas, lors d'un arrêt momentané d'un poste, les produits seront accumulés sans jamais pouvoir être restitués, notamment automatiquement, sur la ligne.

Le but de la présente invention est de proposer un procédé de transfert et de stockage pour l'accumulation et la restitution de produits, ainsi qu'un dispositif accumulateur conçu pour la mise en oeuvre du procédé, qui pallient les inconvénients précités, et notamment permettent de restituer les produits accumulés quel que soit le flux de produit en amont.

Un autre but de l'invention est de proposer un procédé de transfert et de stockage permettant de ranger, de manière optimisée, les produits à accumuler dans un espace de stockage.

D'autres buts et avantages apparaîtront au cours de la description qui va suivre, qui n'est donnée qu'à titre indicatif et qui n'a pas pour but de la limiter.

L'invention concerne tout d'abord un procédé de transfert et de stockage dans une installation pour l'accumulation et la restitution de produits entre un flux de produits entrant nominal, présentant une vitesse V₁, et un flux de produits sortant variable, ledit flux sortant pouvant prendre au moins deux états, à savoir : un état dans lequel le flux sortant est non nul, notamment égal au flux de produits entrant, et un deuxième état dans lequel le flux sortant est nul, procédé dans lequel, au moins, on transfère les produits issus du flux du produits entrant vers le flux de produits sortant au moins par l'intermédiaire d'un convoyeur, et procédé dans lequel :
- dans le cas d'un flux de produits sortant nul, on dérive les produits issus du flux de produits entrant et on les accumule par l'intermédiaire de moyens de stockage,
- dans le cas d'un flux de produits sortant non nul :
   - on transfère directement les produits issus du flux de produits entrant vers le flux de produits sortant par l'intermédiaire du convoyeur, à une vitesse V₂ supérieure à la vitesse V₁, de telle façon à créer au moins un inter-pas sur le convoyeur entre deux produits issus du flux de produits entrant, l'inter-pas étant au moins égal à la longueur d'undit produit,
   - on restitue le produit accumulé par les moyens de stockage en les déposant sur le convoyeur et en les insérant dans le ou les inter-pas précédemment constitués.

L'invention concerne également un dispositif accumulateur conçu pour la mise en oeuvre du procédé de stockage pour l'accumulation et la restitution de produit entre un flux de produits entrant nominal, présentant une vitesse V₁, et un flux de produits sortant variable, ledit flux sortant pouvant prendre au moins deux états, à savoir un premier état dans lequel le flux sortant est non nul, notamment égal au flux de produits entrant, et un deuxième état dans lequel le flux de produits sortant est nul, le dispositif accumulateur comprenant au moins les éléments suivants :
- un convoyeur de longueur suffisante pour porter au moins deux produits, disposés selon l'axe longitudinal dudit convoyeur, apte à transférer les produits à une vitesse V₂ supérieure à V₁, de telle façon a créer au moins un inter-pas sur le convoyeur entre deux produits issus du flux entrant, l'inter-pas étant au moins égal à la longueur d'un produit,
- des moyens de stockage de produits,
- des moyens de dérivation permettant de diriger les produits issus du flux de produits entrant, soit vers le convoyeur, soit, directement ou indirectement, vers les moyens de stockage,
- des moyens pour la restitution des produits accumulés dans les moyens de stockage aptes à disposer les produits sur le convoyeur dans le ou les inter-pas.

L'invention sera mieux comprise à la lecture de la description suivante, accompagnée des dessins en annexe qui en font partie intégrante et parmi lesquels :
- la figure 1 est une vue schématique illustrant le procédé, conforme à l'invention, selon un mode de réalisation, lors de l'étape de dérivation et d'accumulation des produits, notamment de création d'une rangée de produits,
- la figure 2 est une vue schématique illustrant le procédé, conforme à l'invention, lors d'une étape successive à l'étape illustrée à la figure 1, étape successive pendant laquelle la rangée est déplacée en direction d'une zone de stockage,
- la figure 3 est une vue schématique illustrant une étape du procédé, conforme à l'invention, selon un mode de réalisation, lors d'une étape pendant laquelle les produits stockés sont déplacés de la zone de stockage sur le convoyeur,
- la figure 4 est une vue schématique illustrant une étape successive à l'étape illustrée à la figure 3, étape successive pendant laquelle on restitue les produits en les insérant dans les inter-pas,
- la figure 5 est une vue de dessus illustrant un dispositif accumulateur conforme à l'invention,
- la figure 6 est une vue de face du dispositif accumulateur, tel qu'illustré à la figure 5,
- la figure 7 est une vue de côté du dispositif accumulateur, tel qu'illustré à la figure 5,
- la figure 8 est une vue agrandie de la partie basse du dispositif accumulateur, tel qu'illustré à la figure 7,
- la figure 9 est une vue de face des moyens de dérivation du dispositif, tel qu'illustré à la figure 6, notamment constitué par un convoyeur orientable,
- la figure 10 est une vue schématique simplifiée de la coupe X-X, telle qu'illustrée à la figure 9,
- la figure 11 est une vue simplifiée de la coupe XI-XI, telle qu'illustrée à la figure 9,
- la figure 12 illustre une variante des moyens de dérivation illustrés à la figure 10 et se distinguant de ces derniers en ce qu'ils ne présentent pas de convoyeur dit supérieur.

L'invention concerne tout d'abord un procédé de transfert et de stockage dans une installation pour l'accumulation et la restitution de produits entre un flux de produits entrant Fe, présentant une vitesse V₁ et un flux de produits sortant Fs variable.

Ledit flux sortant Fs peut prendre au moins deux états, à savoir un premier état dans lequel le flux sortant est non nul, Fs ≠ 0, notamment égal au flux de produits entrant, et un deuxième état dans lequel le flux sortant est nul, Fs = 0.

Selon le procédé de l'invention, au moins on transfère les produits issus du flux de produits entrant Fe vers le flux de produits sortant Fs au moins par l'intermédiaire d'un convoyeur C₁.

Le procédé peut notamment être utilisé dans une installation comprenant au moins deux postes de travail successifs, l'un précédent le convoyeur C₁, l'autre le suivant.

Le poste de travail, dit précédent ou amont, peut notamment être un poste pour le thermoformage de produits en matière plastique, tels que des blisters, et fonctionner en continu à un régime nominal.

Le poste de travail, dit suivant ou aval, peut notamment être un poste pour l'encartonnage des blisters fonctionnant par alternance.

Ledit convoyeur C₁ permet le transport des produits, dudit poste de travail, dit précédent, vers ledit poste de travail, dit suivant.

Selon le procédé conforme à l'invention :
- dans le cas d'un flux de produits sortant nul, Fs = 0, on dérive les produits, notamment en amont du convoyeur C₁ issu du flux de produit entrant Fe et on les accumule par l'intermédiaire de moyens de stockage 10, C_{2,}
- dans le cas d'un flux de produits sortant non nul Fs ≠ 0 :
   - on transfère directement les produits issus du flux de produits entrant Fe vers le flux de produits sortant Fs, par l'intermédiaire du convoyeur C₁, à une vitesse V₂ supérieure à ladite vitesse V₁, de telle façon à créer au moins un inter-pas Ip sur le convoyeur C₁ entre deux produits issus du flux de produits entrant Fe, l'inter-pas Ip étant au moins égal à la longueur d'un produit,
   - on restitue les produits accumulés par les moyens de stockage 10, C₂ en les déposant sur le convoyeur C₁ et en les insérant dans le ou les inter-pas Ip précédemment constitués.

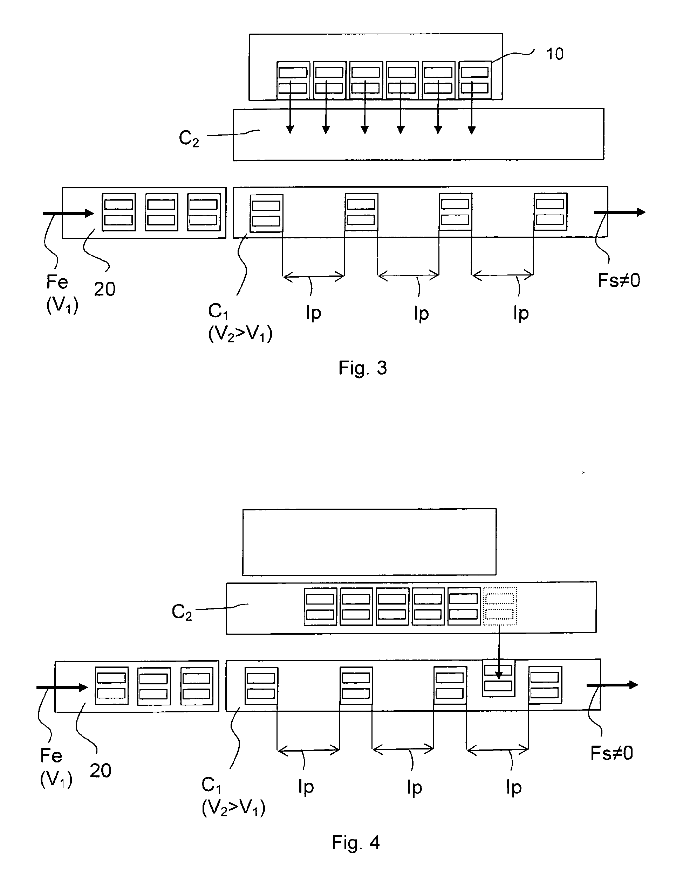

Tels qu'illustrés aux figures 3 et 4, les produits 3 issus du flux de produits entrant Fe sont jointifs ou du moins pas suffisamment espacés pour permettre la restitution des produits accumulés. Le procédé conforme à l'invention consiste donc à écarter ces produits les uns des autres afin de permettre la restitution des produits accumulés sur un même convoyeur C₁ de transfert.

Pour ce faire, le convoyeur C₁ présente une vitesse de transfert V₂ supérieure à la vitesse V₁ du flux de produits entrant Fe. Selon une variante de réalisation, la vitesse V₂ de transfert du convoyeur C₁ est d'environ 3 fois supérieure à la vitesse V₁ dudit flux de produits entrant Fe.

Le procédé de transfert et de stockage permet, selon une variante, d'optimiser le remplissage de l'espace de stockage fourni. Aussi, selon une variante, dans le cas d'un flux de produits sortant nul Fs = 0, lors de l'étape pendant laquelle on dérive les produits issus du flux de produits entrant Fe:
- on resserre les produits dérivés et on crée une rangée Rg de produits 3,
- on déplace la rangée Rg de produits resserrés vers une zone de stockage 10.

Les produits ainsi rangés et stockés sont jointifs, notamment en contact les uns contre les autres, sans espace perdu.

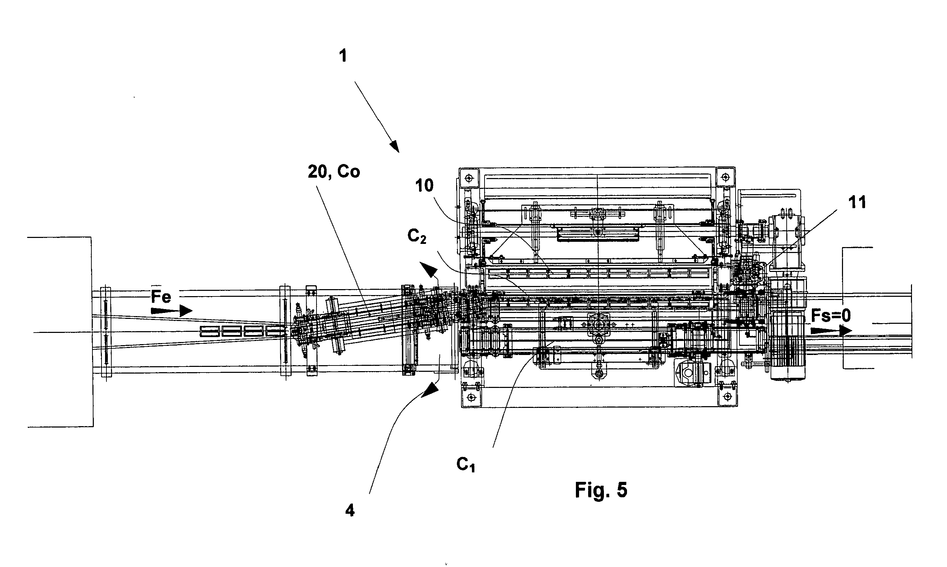

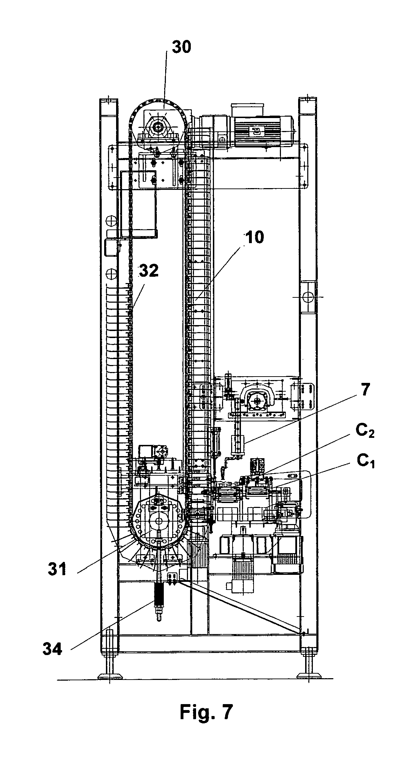

Telle qu'illustrée aux figures 5 à 12, l'invention concerne également un dispositif accumulateur conçu pour la mise en oeuvre du procédé de stockage pour l'accumulation et la restitution de produits entre un flux de produits entrant Fe nominal, présentant une vitesse V₁ et un flux de produits sortant Fs variable.

Le flux sortant Fs peut prendre au moins deux états, à savoir un premier état dans lequel le flux sortant est non nul Fs ≠ 0, notamment égal au flux de produits entrant, et un deuxième état dans lequel le flux sortant est nul Fs = 0.

Le dispositif accumulateur 1 conforme à l'invention comprend au moins les éléments suivants :
- un convoyeur C₁ de longueur suffisante pour porter au moins deux produits 3 disposés selon l'axe longitudinal dudit convoyeur, apte à transférer les produits à une vitesse V₂ supérieure à V₁, de telle façon à créer au moins un inter-pas Ip sur le convoyeur C₁ entre deux produits issus du flux de produits entrant Fe, l'inter-pas Ip étant au moins égal à la longueur d'un produit 3,
- des moyens de stockage 10, C₂ de produits,
- des moyens de dérivation 20 permettant de diriger les produits issus du flux de produits entrant Fe, soit vers le convoyeur C₁, soit directement ou indirectement, vers les moyens de stockage 10, C₂,
- des moyens 7 pour la restitution des produits accumulés dans les moyens de stockage 10, C₂ aptes à disposer les produits sur le convoyeur C₁ dans le ou les inter-pas Ip.

Le dispositif peut notamment présenter deux convoyeurs juxtaposés C₁, C₂, le convoyeur C₁ encore appelé premier convoyeur étant disposé parallèlement au voisinage d'un deuxième convoyeur C₂ de dérivation vers la zone d'accumulation des produits.

Tels qu'illustrés à la figure 5, les deux convoyeurs C₁, C₂ peuvent être de longueur similaire et être constitués par des convoyeurs à bande.

Le deuxième convoyeur C₂ peut être muni d'une butée fixe 11 afin de resserrer les produits 3 et constituer une rangée Rg de produits.

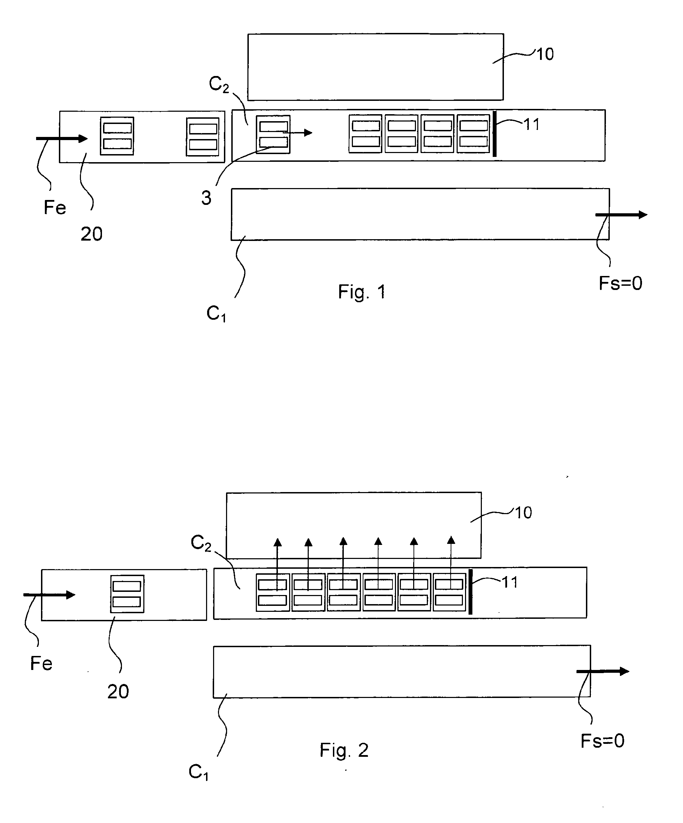

Tel qu'illustré à la figure 1, le convoyeur C₂ entraîne les produits dérivés en direction de la butée 11. Les produits alors non jointifs, reposant simplement sur le deuxième convoyeur C₂ s'entassent les uns contre les autres pour former une rangée.

On entend par butée 11 fixe, le fait que la butée soit fixe par rapport aux produits 3 transférés par le deuxième convoyeur C₂. La butée 11 peut néanmoins être escamotable d'une position dite de contact où la butée interfère avec les produits 3, à une position de dégagement permettant notamment la restitution des produits accumulés et le déplacement des produits sur la droite du convoyeur C₂ tels qu'illustrés à la figure 4.

Les moyens de dérivation 20 peuvent être constitués par un système d'aiguillage à deux positions permettant de diriger les produits 3 issus du flux de produits entrant Fe, soit vers le premier convoyeur C₁, soit vers le deuxième convoyeur C₂.

Tel qu'illustré à la figure 5 avec les flèches 4, le système d'aiguillage peut être constitué par un convoyeur orientable Co et des moyens d'actionnement en rotation pour positionner l'extrémité libre du convoyeur orientable Co soit en vis-à-vis d'une extrémité libre du premier convoyeur C₁, sans vis-à-vis d'une extrémité libre du deuxième convoyeur C₂.

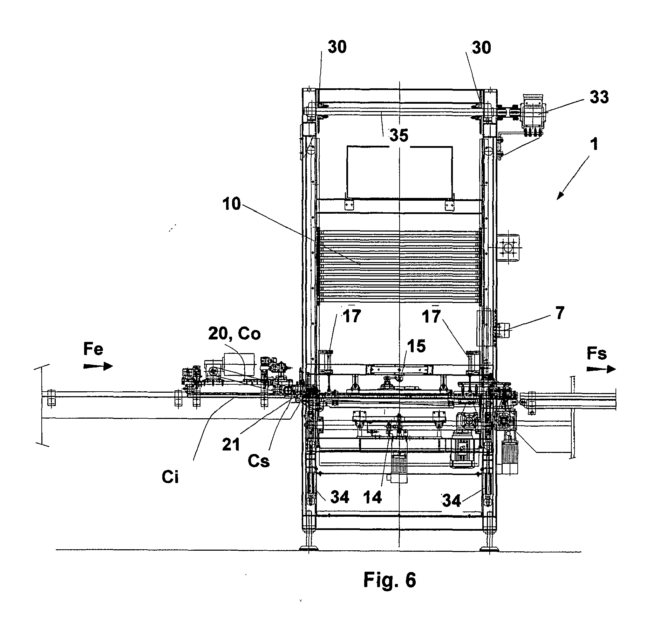

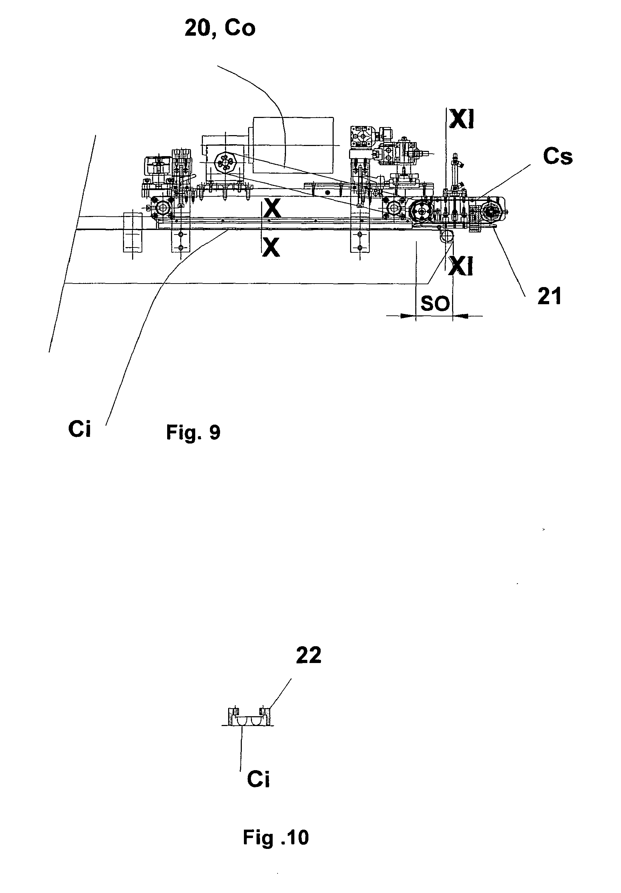

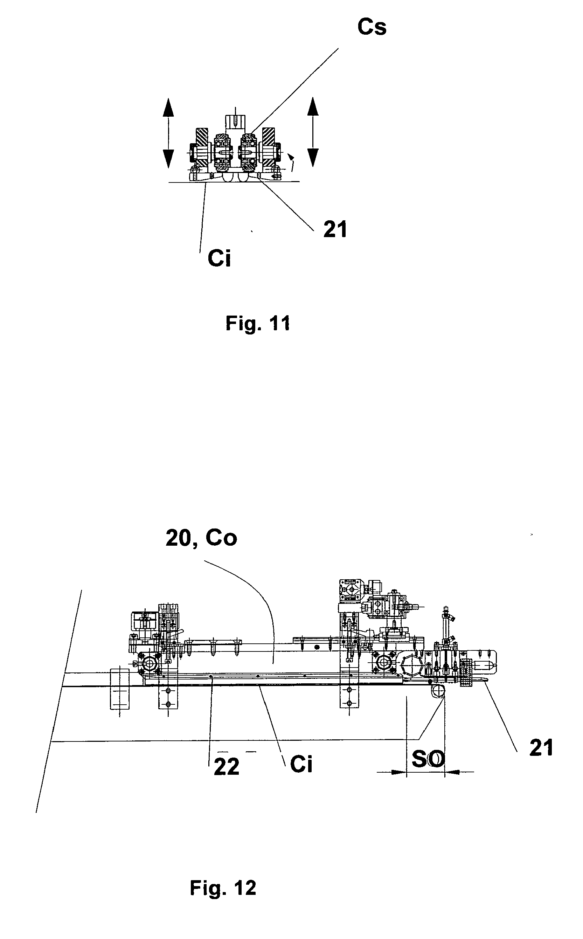

Tel qu'illustré aux figures 6 et 9 selon un premier mode de réalisation et selon la figure 12 selon un deuxième mode de réalisation, le convoyeur orientable Co présente au moins un convoyeur inférieur Ci, notamment à bande et un dispositif à palette présentant des moyens de soulèvement 21 des produits reposant sur le convoyeur inférieur Ci.

Les moyens de soulèvement 21 du dispositif à palette peuvent notamment être utilisés lors d'un changement de position du système d'aiguillage, lorsque ce dernier est dans une position intermédiaire pour bloquer un ou plusieurs produits 3 du convoyeur orientable Co sans toutefois arrêter l'actionnement dudit convoyeur inférieur Ci.

Selon un autre mode de réalisation illustré aux figures 5 et 9, le convoyeur orientable Co présente en outre au moins un convoyeur supérieur Cs disposé au-dessus des moyens de soulèvement 21 dudit dispositif à palette. Les moyens de soulèvement 21 du dispositif à palette permettent ici de dégager les produits reposant sur le convoyeur inférieur Ci et de les appliquer contre l'organe tournant, à savoir la bande ou les galets du convoyeur supérieur Cs. Plus particulièrement, selon ce dernier mode de réalisation, on joue sur la vitesse du convoyeur supérieur Cs du convoyeur orientable Co pour créer un espace libre permettant le changement de position du système d'aiguillage.

Plus particulièrement, juste avant le changement de position du système d'aiguillage, le dispositif à palette soulève par l'intermédiaire des moyens 21 les derniers produits reposant sur le convoyeur orientable Co pour les appliquer sur l'organe tournant du convoyeur supérieur Cs afin de les entraîner à une vitesse V₄ supérieure à la vitesse V₃ d'entraînement du convoyeur inférieur Ci, créant ainsi un espace libre sur le convoyeur orientable Co entre les blisters. Conjointement au changement de position du système d'aiguillage, la vitesse du convoyeur supérieur Cs est diminuée, notamment égale à la vitesse V₃ du convoyeur inférieur Ci.

Selon un mode de réalisation avantageux, la vitesse V₃ du convoyeur inférieur Ci peut être notamment égale à la vitesse V₁ du flux de produit entrant Fe. La vitesse V₄ du convoyeur supérieur Cs peut notamment être égale à la vitesse V₂ du convoyeur C₁. Tel qu'illustré aux figures 9 et 12, le convoyeur inférieur Ci est prévu sur une première partie de longueur du convoyeur orientable Co. Les moyens de soulèvement 21, et le cas échéant, le convoyeur supérieur Cs sont prévus sur une deuxième partie de longueur du convoyeur orientable Co. Les moyens de soulèvement 21, et le cas échéant, le convoyeur supérieur Cs d'une part, et le convoyeur inférieur Ci, d'autre part, se chevauchent au niveau d'une zone de recouvrement SO.

Tels qu'illustrés à la figure 9, les produits 3, notamment les blisters sont guidés sur la première partie de longueur du convoyeur orientable Co par l'intermédiaire de barres de guidage 22. Ces barres de guidage 22 peuvent notamment présenter une section en L inversée avec une aile de retour venant recouvrir les bords latéraux supérieurs des produits 3, notamment des blisters.

Le dispositif 1 peut notamment prévoir des moyens de réglage de l'écartement des barres de guidage 22 afin d'adapter le dispositif à différentes largeurs de produits 3, et notamment des blisters à deux carpules ou encore des blisters à cinq carpules.

De la même façon, les moyens de soulèvement 21 du dispositif à palette peuvent être constitués par des guides latéraux. Ces derniers présentent toutefois une section en L, l'aile horizontale du L permettant de venir soutenir les produits 3, notamment le blister afin de le soulever. De la même façon, le dispositif peut prévoir des moyens de réglage de l'écartement des guides latéraux 21.

Les moyens de stockage peuvent être constitués par le deuxième convoyeur C₂. Afin d'augmenter les capacités d'accumulation, les moyens de stockage peuvent être constitués, en outre par une étagère comprenant une pluralité de plateaux 10 mobiles en translation verticale, l'étagère présentant des moyens d'actionnement et d'entraînement desdits plateaux mobiles 10.

Les plateaux 10 sont notamment assujettis entre les maillons de deux chaînes d'entraînement disposés parallèles, chacune des chaînes formant une boucle fermée, guidée notamment entraînée, par une roue supérieure 30 et une roue inférieure 31 notamment dentées. Tel qu'illustré, un moteur 33 électrique permet l'entraînement d'un arbre de rotation 35 solidaire des roues supérieures 30 pour l'actionnement à la montée ou à la descente des plateaux 10.

Des moyens élastiques 34 prenant appui sur le châssis de la machine permettent de contraindre l'axe de rotation des roues inférieures 31 vers le bas afin de tendre les chaînes 32 et de maintenir les plateaux 10 horizontaux.

Le dispositif peut en outre présenter des moyens de chargement 14 pour déplacer les produits ou lots de produits disposés sur le deuxième convoyeur C₂ sur les plateaux 10 de l'étagère et des moyens de déchargement 15 pour déplacer les produits ou lots de produits disposés sur les plateaux 10 de l'étagère sur ledit deuxième convoyeur C₂.

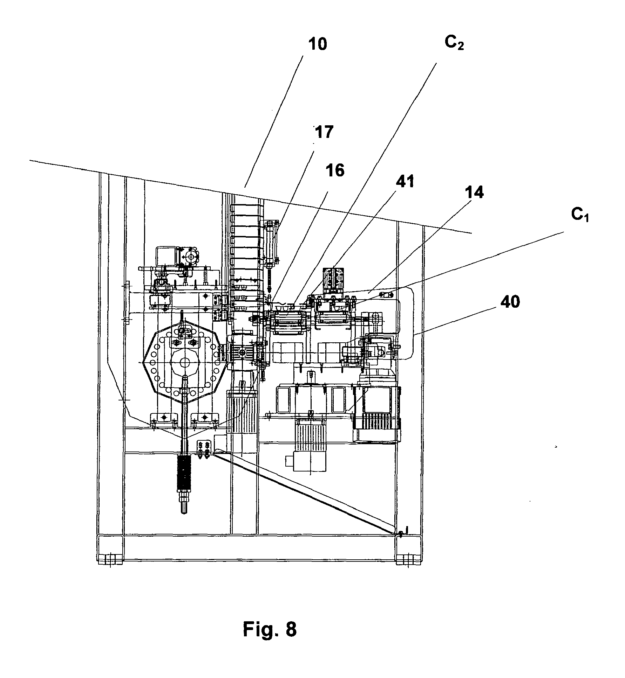

Tels qu'illustrés à la figure 8, les moyens de chargement 14 prennent la forme d'un dispositif éjecteur, avec notamment un bras mobile 40 muni d'un élément poussoir 41 permettant de pousser les produits 3 reposant sur le convoyeur C₂ sur l'un des plateaux 10 de l'étagère.

L'élément poussoir 41 peut prendre la forme d'une barre, disposée parallèlement à l'axe longitudinal du deuxième convoyeur C₂ et qui, en position de repos constitue un guide latéral pour les produits 3. L'élément poussoir 41 est suffisamment long pour pousser une rangée de produits d'un seul mouvement.

Lors du chargement, l'étagère présente un plateau 10 vide à hauteur du convoyeur supérieur. Une fois changés, les plateaux sont décalés d'un pas afin de présenter un nouveau plateau vide.

Le convoyeur C₂ peut en outre présenter un guide latéral 16 escamotable disposé entre le convoyeur C₂ et le plateau 10 destiné à être chargé. Ce guide 16 est escamoté, notamment à la montée, par l'intermédiaire du vérin 16 avant le chargement du plateau 10 par le bras 40.

De la même façon, un dispositif éjecteur permet de décharger les produits disposés sur le plateau 10 sur le deuxième convoyeur C₂ qui peut être de structure équivalente à celui permettant le changement des produits 3.

Les moyens pour la restitution des produits peuvent être constitués par des moyens de préhension 7 pour déplacer les produits 3 disposés sur le deuxième convoyeur C₂ sur le premier convoyeur C₁. Les moyens de préhension 7 peuvent notamment être constitués par un manipulateur à ventouse(s).

Les moyens de préhension, notamment le dispositif à ventouse(s) peut se déplacer dans une direction transverse auxdits convoyeurs C₁' C₂ permettant d'insérer au moins un produit 3 dans un des inter-pas Ip sur le convoyeur C₁.

Entre chaque mouvement d'aller et de retour des moyens de préhension 7, le convoyeur C₂ peut être synchronisé pour avancer d'un pas et positionner les prochains produits 3 à insérer sur le convoyeur C₁ à l'aplomb en dessous du champ d'action des moyens de préhension 7. Selon ce mode de réalisation, la butée fixe 11 est notamment escamotée dans une position de dégagement.

Le procédé de transfert et de stockage ou le dispositif accumulateur trouvera une application particulière, par exemple, pour la production de blisters, entre une thermoformeuse fonctionnant en continu, apte à créer un flux de blisters entrant Fe et une encartonneuse alimentée par un flux de blisters sortant Fs fonctionnant par alternance.

L'encartonneuse est notamment capable d'absorber la cadence nominale de la termoformeuse, plus celle de l'accumulateur lors de la phase de restitution des produits 3.

Bien entendu, le poste de travail en aval, notamment l'encartonneuse et le dispositif accumulateur présentent des moyens de synchronisation permettant au dispositif accumulateur de stocker les produits lorsque le poste de travail en aval est à l'arrêt, ou encore ajuster la cadence du poste de travail en aval, notamment augmenter la cadence de l'encartonneuse, lors de la phase de restitution des produits.

Naturellement, d'autres modes de réalisation, à la portée de l'homme de l'art, auraient pu être envisagés sans pour autant sortir du cadre de la présente demande telle que définie dans les revendications ci-après.

## Revendications

1. Procédé de transfert et de stockage dans une installation pour l'accumulation et la restitution de produits entre un flux de produits entrant (Fe) nominal, présentant une vitesse V₁, et un flux de produits sortant (Fs) variable, ledit flux sortant (Fs) pouvant prendre au moins deux états, à savoir : un premier état dans lequel le flux sortant est non nul (Fs ≠ 0), notamment égal au flux de produits entrant, et un deuxième état dans lequel le flux sortant est nul (Fs=0), procédé dans lequel, au moins, on transfère les produits issus du flux de produits entrant (Fe) vers le flux de produits sortant (Fs) au moins par l'intermédiaire d'un convoyeur (C₁) et procédé dans lequel:
- dans le cas d'un flux de produit sortant nul (Fs=0), on dérive les produits issus du flux de produits entrant (Fe) et on les accumule par l'intermédiaire de moyens de stockage (10, C2),
- dans le cas d'un flux de produit sortant non nul (Fs ≠ 0) :
- on transfert directement les produits issus du flux de produits entrant (Fe) vers le flux de produits sortant (Fs) par l'intermédiaire du convoyeur (C₁), à une vitesse V₂ supérieure à ladite vitesse V₁ de telle façon a créer au moins un inter-pas (Ip) sur le convoyeur (C1) entre deux produits (3) issus du flux entrant (Fe), l'inter-pas (Ip) étant au moins égal à la longueur d'undit produit (3),
- on restitue les produits accumulés par les moyens de stockage (10, C₂) en les déposant sur le convoyeur (C₁) et en les insérant dans le ou les inter-pas (Ip) précédemment constitués.

2. Procédé selon la revendication 1, dans lequel ladite vitesse V₂ de transfert du convoyeur (C1) est environ trois fois supérieure à la vitesse V₁ dudit flux de produits entrant (Fe).

3. Procédé selon la revendication 1, dans lequel dans le cas d'un flux de produit sortant nul (Fs=0), lors de l'étape pendant laquelle on dérive les produits issus du flux de produits entrant (Fe):
- on resserre lesdits produits dérivés et on crée une rangée (Rg) de produits (3),
- on déplace ladite rangée (Rg) de produits resserrés vers une zone de stockage (10).

4. Dispositif accumulateur (1), conçu pour la mise en oeuvre du procédé de stockage pour l'accumulation et la restitution de produits (3), selon la revendication 1, entre un flux de produits entrant (Fe) nominal, présentant une vitesse V₁, et un flux de produits sortant (Fs) variable, ledit flux sortant (Fs) pouvant prendre au moins deux états, à savoir : un premier état dans lequel le flux sortant est non nul (Fs ≠ 0), notamment égal au flux de produits entrant, et un deuxième état dans lequel le flux sortant est nul (Fs=0), le dispositif accumulateur (1) comprenant au moins les éléments suivants:
- un convoyeur (C₁) de longueur suffisante pour porter au moins deux produits disposés selon l'axe longitudinal du convoyeur (C₁), apte à transférer les produits à une vitesse V₂ supérieure à V₁ , de telle façon a créer au moins un inter-pas (Ip) sur le convoyeur (C₁) entre deux produits issus du flux entrant (Fe), l'inter-pas (Ip) étant au moins égal à la longueur d'un produit,
- des moyens de stockage (10, C₂) de produits,
- des moyens de dérivation (20) permettant de diriger les produits issus du flux de produits entrant (Fe), soit vers le convoyeur (C₁), soit, directement ou indirectement, vers les moyens de stockage (10, C₂),
- des moyens (7) pour la restitution des produits ou lots de produits accumulés dans les moyens de stockage (10, C₂) aptes à disposer les produits sur le convoyeur (C₁) dans le ou les inter-pas (Ip).

5. Dispositif selon la revendication 4 dans lequel le dispositif présente deux convoyeurs juxtaposés (C₁, C₂), le convoyeur (C₁), encore appelé premier convoyeur étant disposé parallèlement au voisinage d'un deuxième convoyeur (C₂).

6. Dispositif selon la revendication 5 dans lequel le deuxième convoyeur (C2) est muni d'une butée fixe (11) afin de resserrer les produits et constituer une rangée (Rg) de produits.

7. Dispositif selon la revendication 5 dans lequel les moyens de dérivations (20) sont constitués par un système d'aiguillage à deux positions permettant de diriger les produits issus du flux de produits entrant (Fe) soit sur le premier convoyeur (C₁), soit sur le deuxième convoyeur (C₂).

8. Dispositif selon la revendication 7, dans lequel le système d'aiguillage est constitué au moins par un convoyeur orientable (Co) et des moyens d'actionnement en rotation pour positionner l'extrémité libre du convoyeur orientable (Co) soit en vis-à-vis de d'une extrémité libre du premier convoyeur (C₁), soit en vis-à-vis de d'une extrémité libre du deuxième convoyeur (C₂).

9. Dispositif selon la revendication 8, dans lequel le convoyeur orientable (Co) présente au moins un convoyeur inférieur (Ci) et un dispositif à palette présentant des moyens de soulèvement (21) des produits reposant sur ledit convoyeur inférieur (Ci).

10. Dispositif selon la revendication 9, dans lequel le convoyeur orientable (Co) présente en outre au mois un convoyeur supérieur (Cs) disposé au dessus des moyens de soulèvement (21) dudit dispositif à palette , les moyens de soulèvement (21) du dispositif à palette permettant de dégager les produits (3) reposant sur le convoyeur inférieur (Ci) et de les appliquer contre l'organe tournant du convoyeur supérieur (Cs).

11. Dispositif selon la revendication 5, dans lequel les moyens de stockage (10, C₂) sont constitués par ledit deuxième convoyeur (C₂), et par une étagère comprenant une pluralité de plateaux (10) mobiles en translation verticale, l'étagère présentant des moyens d'actionnement et d'entraînement desdits plateaux mobiles.

12. Dispositif selon la revendication 11, dans lequel le dispositif présente des moyens de chargement (14) pour déplacer les produits ou lots de produits disposés sur ledit deuxième convoyeur (C₂) sur les plateaux (10) de l'étagère et des moyens de déchargement (15) pour déplacer les produits ou lots de produits disposés sur les plateaux (10) de l'étagère sur ledit deuxième convoyeur (C₂).

13. Dispositif selon la revendication 5, dans lequel le dispositif présente des moyens de préhension (7) pour déplacer les produits disposés sur ledit deuxième convoyeur (C₂) sur ledit premier convoyeur (C₁).

14. Dispositif selon la revendication 13, dans lequel les moyens de préhension (7) sont constitués par un manipulateur à ventouse(s).

15. Application du procédé de transfert et de stockage pour selon l'une des revendications 1 à 3 , ou du dispositif accumulateur selon l'une des revendications 4 à 14 pour la production de blisters, entre une thermoformeuse fonctionnant en continu, apte à créer un flux de blisters entrant (Fe) et une encartonneuse alimentée par un flux de blisters sortant (Fs), fonctionnant par alternance.
